Europäisches Patentamt

European Patent Office

Office européen des brevets

(19)

(11)  EP 0 983 129 B1

(12)  FASCICULE DE BREVET EUROPEEN

(45) Date de publication et mention
de la délivrance du brevet:
**17.07.2002  Bulletin 2002/29**

(51) Int Cl.$^7$: **B22D 11/06**, C22F 1/04

(21) Numéro de dépôt: **98925714.2**

(22) Date de dépôt: **14.05.1998**

(86) Numéro de dépôt international:
**PCT/FR98/00965**

(87) Numéro de publication internationale:
**WO 98/52707 (26.11.1998 Gazette 1998/47)**

(54) **PROCEDE DE FABRICATION DE BANDES EN ALLIAGES D'ALUMINIUM PAR COULEE CONTINUE MINCE ENTRE CYLINDRES**

VERFAHREN ZUR HERSTELLUNG VON ALUMINIUMBÄNDERN DURCH ROLLEN-BANDGIESSEN

METHOD FOR MAKING ALUMINIUM ALLOY STRIPS BY CONTINUOUS THIN GAUGE TWIN-ROLL CASTING

(84) Etats contractants désignés:
**AT DE ES FR GB IT**

(30) Priorité:  **20.05.1997  FR 9706407**

(43) Date de publication de la demande:
**08.03.2000  Bulletin 2000/10**

(73) Titulaire: **Pechiney Rhenalu**
**75116 Paris (FR)**

(72) Inventeurs:
• HOFFMANN, Jean-Luc
  F-38430 Moirans (FR)

• CORTES, Marcel
  F-38190 Brignoud (FR)

(74) Mandataire: **Mougeot, Jean-Claude**
**PECHINEY**
**Immeuble "SIS"**
**217 ,cours Lafayette**
**69451 Lyon Cedex 06 (FR)**

(56) Documents cités:
**EP-A- 0 039 211          WO-A-96/27031**

• **PATENT ABSTRACTS OF JAPAN vol. 096, no. 003, 29 mars 1996 & JP 07 292449 A (SKY ALUM CO LTD), 7 novembre 1995**

## Description

### Domaine technique de l'invention

L'invention concerne un procédé de fabrication de bandes en alliages d'aluminium faiblement chargés en magnésium et en cuivre, notamment des alliages AlFeSi et AlMn, par coulée continue entre cylindres (en anglais « twin-roll casting ») de faible épaisseur (< 5 mm). Elle concerne également des bandes de tels alliages coulées par coulée continue mince entre cylindres, et éventuellement laminées à froid, présentant à la fois une résistance mécanique élevée, une bonne formabilité et une bonne anisotropie.

### Etat de la technique

Pour obtenir une résistance mécanique élevée sur des alliages d'aluminium ne nécessitant pas de durcissement structural ultérieur, on a généralement recours à l'addition de magnésium, comme dans les alliages de la série 5000 selon la nomenclature de l'Aluminum Association. Outre que la coulée de ces alliages, notamment en coulée continue, est assez délicate, il existe des applications pour lesquelles la présence de magnésium en quantité appréciable est exclue. C'est par exemple le cas pour les tôles destinées aux ustensiles culinaires émaillés, où le magnésium a un effet défavorable sur l'accrochage de la couche d'émail, ou pour les bandes destinées à la fabrication d'ailettes pour échangeurs de chaleur brasés avec un flux fluoré, car le magnésium diffuse à la surface et réagit avec le flux. Pour cette raison, on utilise pour ces applications des alliages AlFeSi de la série 1000, des alliages AlMn de la série 3000 ou des alliages AlSiFe de la série 4000, dont la résistance mécanique est nettement plus faible. L'article de M. DELEUZE et D. MARCHIVE « Les nouveaux alliages de corroyage 4006 et 4007 », Revue de l'Aluminium, juin 1980, pp. 289-292, montre bien les exigences que pose le marché des ustensiles culinaires aux fabricants de bandes en alliages d'aluminium.

Ces bandes d'alliages sont produites habituellement par coulée semi-continue verticale de plaques, laminage à chaud, laminage à froid et recuit d'adoucissement. Après émaillage impliquant un recuit à une température de l'ordre de 550°C, ou après revêtement de PTFE soumis à une polymérisation vers 450°C, les tôles en alliages 4006 ou 4007 présentent une limite élastique $R_{0,2}$ comprise entre 55 et 80 MPa.

On peut également fabriquer les bandes par coulée continue, notamment par coulée entre deux cylindres d'acier refroidis. La coulée continue, dans la mesure où les conditions de solidification sont différentes du procédé habituel, peut conduire à des microstructures également assez différentes. Ainsi, le brevet US 3989548 d'Alcan, publié en 1976, décrit (exemple 9) des alliages d'aluminium contenant l'un au moins des éléments Fe, Mn, Ni ou Si coulés en bandes par coulée continue entre cylindres à une épaisseur de 7 mm. La structure de la bande coulée présente des bâtonnets de composés intermétalliques fragiles de diamètre compris entre 0,1 et 1,5 μm, qu'un laminage à froid avec une réduction d'au moins 60% brise en fines particules de taille inférieure à 3 μ. Les bandes obtenues présentent un bon compromis entre la résistance mécanique et la formabilité, mais les propriétés ne deviennent intéressantes que pour des alliages assez chargés, par exemple des alliages AlFeMn avec Fe > 1,4% et Mn > 0,6%, ou des alliages AlFeNi avec Fe > 1,2% et Ni > 1,1%.

Le brevet FR 2429844 (= GB 2024870) de Norsk Hydro décrit un procédé de production par coulée continue de bandes en alliage AlMn, AlMg, AlMgSi ou AlMgMn présentant à la fois une bonne résistance mécanique et une bonne ductilité, dans lequel on ajoute à l'alliage moins de 0,5% d'éléments antirecristallisants (Zr, Nb, Ta, Hf, Ni, Cr, Ti, V ou W).

Le brevet US 5380379 d'Alcoa concerne la fabrication, par coulée continue entre cylindres, de feuilles minces en alliages assez chargés, contenant de 1,35 à 1,6% de fer, de 0,3 à 0,6% de manganèse, de 0,1 à 0,4% de cuivre et moins de 0,2% de silicium. La teneur en silicium est limitée par l'apparition de phases intermétalliques de type AlFeSi ou AlMnSi, tandis que la présence de cuivre est nécessaire pour conférer au produit une résistance mécanique suffisante.

A l'inverse, la demande de brevet WO 96/27031 d'Alcan concerne des alliages moins chargés contenant 0,40 à 0,70% de fer, 0,10 à 0,30% de manganèse, 0,10 à 0,25% de cuivre et moins de 0,10% de silicium, obtenus par coulée continue de bandes d'épaisseur inférieure à 25 mm, dont les propriétés sont voisines de celles de l'alliage 3003. Après laminage à froid et recuit entre 350 et 400°C, l'alliage présente à l'état « O » (selon la norme NF EN 515) une taille de grains inférieure à 70 microns et des propriétés très proches de l'alliage 3003 élaboré selon une gamme de transformation habituelle. Un tel domaine de composition peut s'avérer contraignant pour certaines applications où on utilise des alliages moins chargés, comme le 1050, ou des alliages exempts de cuivre.

Le brevet EP 0039211 d'Alcan décrit un procédé de fabrication par coulée continue, à une épaisseur comprise entre 3 et 25 mm, de bandes en alliages AlMn, contenant de 1,3 à 2,3% de manganèse, et éventuellement moins de 0,5% de fer, de magnésium ou de cuivre, moins de 2% de zinc et moins de 0,3% de silicium. La gamme de transformation décrite est assez complexe puisqu'elle comporte une homogénéisation pour précipiter au moins la moitié du manganèse sous forme d'intermétalliques, un laminage à froid avec une réduction d'au moins 30% et un ou plusieurs recuits intermédiaires. Les bandes obtenues présentent des caractéristiques mécaniques ne permettant pas de dépasser, pour le produit A x $R_{0,2}$, A étant l'allongement à la rupture en % et $R_{0,2}$ la limite élastique à 0,2% en MPa, la valeur de 2100.

Le brevet EP 0304284 d'Alcan décrit un alliage à stabilité thermique élevée contenant de 1,5 à 2,5% de manganèse, de 0,4 à 1,2% de chrome, de 0,4 à 0,8% de zirconium et jusqu'à 2% de magnésium, ainsi que son élaboration par coulée continue de bandes d'épaisseur inférieure à 4 mm. Les teneurs très inhabituelles en chrome et en zirconium, surtout lorsqu'elles se combinent à une addition de magnésium, conduisent à une résistance mécanique élevée, mais au détriment de l'allongement qui reste toujours inférieur à 10%, ce qui rend ces alliages inaptes, même en l'absence de magnésium, à la fabrication par exemple d'ustensiles culinaires.

La coulée continue de bandes en alliages d'aluminium entre des cylindres refroidis est connue depuis de nombreuses années. Elle permet, pour un coût d'investissement modéré, d'obtenir dans une assez large gamme d'alliages des bandes qui ne nécessitent pas de laminage à chaud ultérieur. Ces dernières années, des progrès importants ont été faits par les fabricants de machines de coulée pour diminuer l'épaisseur de la bande coulée qui peut descendre dans certains cas jusqu'à environ 1 mm, ce qui diminue d'autant le laminage à froid à effectuer, et peut même le supprimer si l'on vise des épaisseurs > 1 mm, à condition que la qualité de la bande coulée soit suffisante pour les applications envisagées. Ces progrès ont fait l'objet de communications dans les congrès professionnels, par exemple:

- M. CORTES « Pechiney Jumbo 3CM ® The new demands of thin strip casting. » Light Metals TMS 1995, p. 1161.
- B. TARAGLIO, C. ROMANOWSKI « Thin gauge / High Speed roll casting Technology for Foil Production» Light Metals TMS 1995, pp. 1165 - 1182. Cet article mentionne un certain nombre d'alliages qui peuvent être coulés sur la machine décrite, par exemple les alliages 1050, 1060, 1100, 1145, 1188, 1190, 1193, 1199, 1200, 1230, 1235, 1345, 3003, 8010, 8011, 8111 et 8014. L'article indique également que la puissance du laminoir utilisé pour la coulée continue entre cylindres est de 3000 t, ce qui souligne la nécessité d'utiliser des efforts importants quand on coule en épaisseur mince.

**But de l'invention**

L'invention a pour but d'obtenir des bandes en alliages d'aluminium à faible teneur en Mg et Cu présentant, à l'état brut de coulée continue ou laminé à froid, une résistance mécanique nettement supérieure à celle des bandes semblables et de même composition obtenues par coulée traditionnelle ou coulée continue épaisse, ainsi qu'une formabilité et une anisotropie au moins aussi bonnes. Elle a également pour but d'obtenir des bandes en alliages d'aluminium recristallisant à une température nettement supérieure à la température de recristallisation des mêmes alliages obtenus par coulée traditionnelle, et plus particulièrement des alliages ne recristallisant pas à la température habituelle d'émaillage ou de polymérisation du PTFE des ustensiles culinaires.

**Objet de l'invention**

L'invention a pour objet un procédé de fabrication de bandes en alliage d'aluminium contenant (en poids) l'un au moins des éléments Fe (de 0,15 à 1,5%) ou Mn (de 0,35 à 1,9%) avec Fe + Mn < 2,5%, et contenant éventuellement Si (< 0,8%), Mg (< 0,2% et de préférence < 0,05%), Cu (< 0,2% et de préférence < 0,1%), Cr (< 0,2% et de préférence < 0,02%) ou Zn (< 0,2% et de préférence < 0,1%), les autres éléments étant < 0,1% chacun et 0,3% au total, par coulée continue entre cylindres refroidis et frettés à une épaisseur comprise entre 1 et 5 mm, suivie éventuellement d'un laminage à froid, l'effort appliqué aux cylindres de coulée, exprimé en t par mètre de largeur de bande, étant inférieur à 300 + 2000/e, e étant l'épaisseur de la bande exprimée en mm La coulée se fait de manière préférentielle avec un arc de contact inférieur à 60 mm et avec un échange thermique ralenti tel que la température de la frette des cylindres de coulée reste à une température supérieure à 80°C et, de préférence, à 130°C.

L'invention a également pour objet des bandes en alliage d'aluminium de la composition ci-dessus et d'épaisseur comprise entre 1 et 5 mm, obtenues par coulée continue entre cylindres, présentant, à l'état brut de coulée, un produit $R_{0,2}$ x A > 2500 (et de préférence > 3000), $R_{0,2}$ étant la limite élastique à 0,2% de la bande exprimée en MPa et A l'allongement à la rupture exprimé en %. Les bandes présentent une limite élastique $R_{0,2}$ supérieure à 80 MPa, un allongement A supérieur à 20% et un taux de cornes inférieur à 7, et de préférence à 5.

Elle a enfin pour objet une bande en alliage AlMn entrant dans la composition précédente (Mn > 0,35%) et telle que la somme des teneurs Fe + Mn soit comprise entre 1,4 et 2,5% (de préférence entre 1,5 et 2%) coulée entre cylindres à une épaisseur < 5 mm et éventuellement laminée à froid, présentant après émaillage ou revêtement PTFE, une limite élastique > 80 MPa et de préférence > 100 MPa.

## Description de l'invention

L'invention repose sur la constatation qu'un réglage particulier des paramètres de coulée d'une bande mince entre deux cylindres permet d'obtenir, pour des alliages sans traitement thermique et sans addition de magnésium ou de cuivre, un ensemble de caractéristiques mécaniques tout à fait surprenantes à l'état coulé ou laminé à froid, en particulier une limite élastique très nettement supérieure à celle de bandes de même composition coulées de manière traditionnelle, ou par coulée continue de bandes épaisses ou par coulée continue de bandes minces dans des conditions différentes.

L'invention s'applique aux alliages d'aluminium sans traitement thermique et pratiquement exempts de magnésium et de cuivre. Il s'agit essentiellement d'alliages très peu chargés en éléments d'addition, comme le 1050, mais qui contiennent toujours au moins 0,15% de fer, d'alliages AlFeSi pouvant contenir jusqu'à 1,5% de fer et 0,8% de silicium, tels que les alliages 1050, 1100, 1200, 1235, 8006 (ce dernier contenant également du manganèse), 8011 ou 8079, et enfin d'alliages au manganèse contenant entre 0,35 et 1,9% de Mn, tels que l'alliage 3003.

Pour les alliages contenant du silicium, la possibilité d'aller jusqu'à 0,8% de silicium est un avantage par rapport à la coulée traditionnelle et permet de recycler certains alliages, comme ceux utilisés pour les échangeurs brasés qui sont revêtus d'alliage AlSi. Cependant, au delà de 0,8%, on observe la formation de phases primaires AlMnSi ou AlFeSi qui peuvent être gênantes pour la coulabilité, notamment à cause du risque de solidification dans l'injecteur. On risque de même l'apparition de phases primaires pour les alliages au manganèse lorsque Mn dépasse 1,9% ou lorsque la somme Mn + Fe dépasse 2,5%.

Les bandes selon l'invention présentent une microstructure originale. La taille moyenne des particules de phases intermétalliques au fer, au silicium et au manganèse est de l'ordre de 0,4 µm, et au moins 90% de ces particules ont une taille inférieure à 1 µm. Cette microstructure peut être observée par microscopie électronique à balayage sur une coupe polie de métal. Pour déterminer la taille des particules, on évalue, par analyse numérique des micrographies, leur aire A, à partir de laquelle on calcule le paramètre de taille d par la formule $d = 2\sqrt{A/\pi}$.

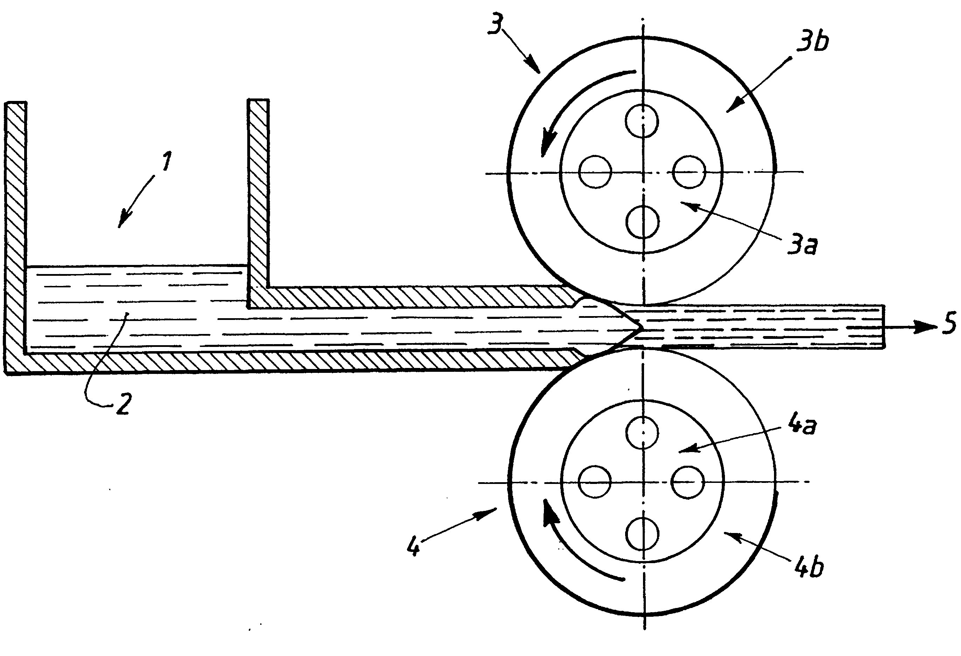

Le procédé de fabrication de bandes en alliages d'aluminium selon l'invention sera décrit en référence à la figure 1, qui représente schématiquement en coupe longitudinale une machine de coulée continue de bandes entre cylindres. Cette machine comprend une alimentation en métal liquide (1), un injecteur (2) qui introduit le métal liquide dans l'intervalle compris entre deux cylindres refroidis (3 et 4). Chacun des cylindres (3) et (4) comprend un corps de cylindre (3a) et (4a) avec un circuit d'eau de refroidissement débouchant à sa surface. Le corps de cylindre est enserré dans une frette tubulaire (3b) et (4b) qui assure le contact mécanique et thermique avec le métal et peut être remplacée après usure. La solidification du métal se fait entre les cylindres et il sort une bande métallique solide (5). On désigne par arc de contact la distance d séparant la sortie de l'injecteur (2) et le plan des axes des cylindres (3) et (4).

L'alliage est coulé en une bande d'épaisseur comprise entre 1 et 5 mm. La principale disposition à respecter est de couler avec un effort exercé par les cylindres relativement faible, contrairement aux enseignements de l'art antérieur. Cet effort, exprimé en tonnes par mètre de largeur de bande coulée, doit rester inférieur à 300 + 2000/e, e étant l'épaisseur de coulée mesurée en mm. Ainsi, pour une épaisseur de coulée de 2,5 mm, l'effort doit rester inférieur à 1100 t par mètre de largeur.

D'autres dispositions ont une influence favorable sur les caractéristiques mécaniques de la bande coulée. Ainsi, et contrairement à ce qu'on aurait pu attendre, il est préférable que l'échange thermique entre le métal en cours de solidification et la frette des cylindres ne soit pas trop bon. Ceci se traduit par une température élevée des frettes, typiquement supérieure à 80°C, et de préférence à 130°C et peut être obtenu par des frettes en métal mauvais conducteur thermique (par exemple un acier au molybdène) et relativement épaisses (par exemple entre 50 et 100 mm). Une autre disposition favorable, qui est partiellement en relation avec la précédente, est d'opérer avec un arc de contact plutôt faible, inférieur à 60 mm, et de préférence inférieur à 56 mm. Ceci diminue en effet l'échange de chaleur entre le métal et les frettes, et peut être obtenu en rapprochant l'injecteur des cylindres et/ou en utilisant des cylindres relativement petits.

Ces conditions de coulée confèrent à la bande la microstructure décrite ci-dessus et conduisent à ce que l'alliage ne recristallise pas tant qu'il n'atteint pas une température de l'ordre de 380 à 400°C, ce qui permet par exemple de maintenir une résistance mécanique élevée après les traitements d'émaillage ou de revêtement de PTFE des articles culinaires fabriqués à partir de cette bande.

Les bandes en alliages selon l'invention présentent à l'état brut de coulée une résistance mécanique nettement supérieure à celle des bandes en même alliage et de même épaisseur obtenues en coulée traditionnelle de plaques avec laminage à chaud et à froid, et même à celle de bandes issues de coulée continue dans des conditions différentes de coulée. La limite élastique est, pour l'ensemble des alliages selon l'invention, toujours supérieure à 80 MPa et le plus souvent à 100 MPa, notamment pour les alliages au manganèse. On a également une bonne formabilité, avec un allongement à la rupture toujours supérieur à 20% (et à 30% pour les alliages sans Mn, comme le 1050 ou le 1200), et surtout un compromis entre limite élastique et allongement, mesuré par le produit $R_{0,2}$ x A ($R_{0,2}$ exprimé en MPa et A en %) particulièrement favorable, ce produit étant toujours supérieur à 2500, et le plus souvent à 3000. On obtient également de bonnes propriétés d'anisotropie, avec un taux de cornes toujours inférieur à 7, et le plus souvent inférieur à 5.

Les caractéristiques mécaniques sont mesurées dans le sens long selon la norme EN 10002. Le taux de cornes est mesuré selon la norme NF-EN 1669 avec un rapport d'emboutissage compris entre 1,8 et 1,95, et de préférence 1,92, et s'exprime (en %) par le rapport: 2 x (moyenne des hauteurs des 4 cornes - moyenne des hauteurs des 4 creux) / (hauteur moyenne des 4 cornes + hauteur moyenne des 4 creux), l'anisotropie de ce type d'alliages étant généralement du type à 4 cornes à 45°.

Pour les alliages au manganèse avec Mn + Fe > 1,4%, on obtient, après des recuits jusqu'à 550°C (par exemple les recuits d'émaillage ou de polymérisation du PTFE), une limite élastique > 80 MPa et le plus souvent > 100 MPa.

Après une ou plusieurs passes de laminage à froid, les bandes selon l'invention présentent une limite élastique $R_{0,2}$ très significativement supérieure à celle de bandes issues de coulée conventionnelle ayant subi le même écrouissage. La limite élastique après écrouissage s'exprime habituellement par une loi d'écrouissage selon la formule:

$$R_{0,2} = k \, \varepsilon^n \text{ avec } \varepsilon = (2/\sqrt{3}) \, l_n \text{ (épaisseur initiale/épaisseur finale)}$$

l'épaisseur initiale étant l'épaisseur brute de coulée pour la coulée continue de bandes, et l'épaisseur de la bande au dernier recuit de recristallisation pour les bandes issues de coulée traditionnelle à partir de plaques et laminées à chaud. Pour les bandes laminées à froid selon l'invention avec un coefficient de réduction d'au plus 60%, c'est-à-dire pour les valeurs d's comprises entre 0 et 1, le coefficient k est toujours supérieur à 150, alors qu'il est inférieur pour des bandes issues de coulée traditionnelle, et n est inférieur à 0,20 (et le plus souvent à 0,15) alors qu'il est supérieur à 0,20 pour les bandes issues de coulée traditionnelle.

Cet ensemble de propriétés est particulièrement avantageux pour la fabrication d'ustensiles culinaires emboutis pour lesquels il est nécessaire d'utiliser des alliages sans magnésium. Grâce à la coulée mince, on peut utiliser des bandes brutes de coulée, ce qui conduit à un coût de revient intéressant, et les traitements thermiques occasionnés par les opérations d'émaillage et de revêtement par des produits antiadhésifs comme le polytétrafluoréthylène (PTFE) n'entraînent pas de perte de caractéristiques mécaniques. Ces propriétés sont également intéressantes pour la fabrication d'ailettes d'échangeurs de chaleur, notamment les radiateurs ou climatiseurs d'automobiles, destinées à être assemblées avec des tubes par brasage à l'aide d'un flux non corrosif. Là aussi, la présence de magnésium est exclue et le brasage au four ne fait pas chuter les caractéristiques mécaniques. Enfin, elles sont également intéressantes pour la fabrication de produits vernis ou laqués devant subir un traitement de cuisson des revêtements.

**Exemples**

**Exemple 1: influence de l'effort entre cylindres**

On a coulé sur une machine de coulée continue entre cylindres 3CM ® de la société Pechiney Aluminium Engineering, les 5 alliages dont la composition chimique (% en poids) est donnée au tableau 1:

Tableau 1

| Alliage | Mn | Fe | Si | Mg |
|---|---|---|---|---|
| 8006 | 0,44 | 1,29 | 0,15 | 0,028 |
| 3003 | 1,1 | 0,40 | 0,10 | - |
| 1050 | - | 0,20 | 0,14 | 0,002 |
| 8011 | - | 0,75 | 0,70 | - |
| 1200 | - | 0,55 | 0,20 | - |

On a mesuré dans chaque cas l'épaisseur de coulée, l'effort entre cylindres par mètre de largeur de bande, comparé à la valeur limite 300 - 2000/e, ainsi que les caractéristiques mécaniques de la bande brute de coulée: résistance à la rupture $R_m$ (en MPa), limite d'élasticité conventionnelle à 0,2% $R_{0,2}$ (en MPa), allongement à la rupture A (en %) et taux de cornes (en %) selon la norme NF-EN 1669 avec un taux d'emboutissage de 1,92.

Les résultats sont rassemblés au tableau 2:

Tableau 2

| Alliage | e mm | Effort t/m | 300 + 2000/e | $R_m$ MPa | $R_{0,2}$ MPa | A % | R0,2 x A | Taux cornes |
|---|---|---|---|---|---|---|---|---|
| 8006 | 3,1 | 867 | 945 | 166 | 118 | 25 | 2950 | 2,8 |
| 3003 | 3,0 | 900 | 967 | 158 | 114 | 23 | 2622 | 4,4 |
| 1050 | 3,5 | 720 | 871 | 106 | 81 | 39 | 3159 | 4,0 |
| 8011 | 3,9 | 1018 | 813 | 156 | 112 | 23 | 2576 | 9,0 |
| 1200 | 3,0 | 1100 | 967 | 121 | 93 | 32 | 2976 | 8,9 |
| 3003 | 3,5 | 1400 | 871 | 181 | 141 | 17 | 2297 | 8,0 |

On constate que, dans les 3 premiers cas, on obtient à la fois un allongement supérieur à 20% et un produit $R_{0,2}$ x A supérieur à 2500 et un taux de cornes inférieur à 7. Par contre, pour les 3 derniers cas où l'effort est trop élevé, le taux de cornes est très important, ce qui rend la bande inapte à l'emboutissage.

**Exemple 2: influence de la température de frette**

On a comparé, pour les alliages 1050 et 3003, les caractéristiques mécaniques des bandes coulées avec des températures de frette respectives de 130° (selon l'invention) et 70° (hors invention). Les résultats sont donnés au tableau 3:

Tableau 3

| Alliage | e (mm) | temp. (°) | $R_m$(MPa) | $R_{0,2}$ (MPa) | A (%) | $R_{0,2}$ x A |
|---|---|---|---|---|---|---|
| 1050 | 3 | 130 | 106 | 81 | 39 | 3159 |
| 1050 | 3 | 70 | 105 | 80 | 29 | 2320 |
| 3003 | 3,5 | 130 | 158 | 114 | 23 | 2622 |
| 3003 | 3 | 70 | 149 | 114 | 18 | 2052 |

On contate qu'une température de frette élevée contribue à une augmentation de l'allongement sans préjudice sur la résistance mécanique.

**Exemple 3: influence de l'arc de contact et de l'effort sur le taux de cornes**

On a mesuré le taux de cornes sur des bandes coulées à différentes épaisseurs, avec des efforts entre cylindres différents et des arcs de contact de différentes longueurs. Les résultats sont rassemblés au tableau 4

Tableau 4

| Alliage | e mm | Effort t/m | 300+2000/e t/m | Arc contact mm | Taux cornes % |
|---|---|---|---|---|---|
| 8006 | 3,1 | 867 | 943 | 45 | 2,8 |
| 3003 | 3,0 | 937 | 967 | 45 | 3,2 |
| 8006 | 3,2 | 867 | 925 | 45 | 3,2 |
| 8006 | 3,1 | 833 | 945 | 45 | 2,4 |
| 3005 | 3,0 | 567 | 967 | 45 | 1,5 |
| 3005 | 2,35 | 833 | 1151 | 45 | 1,7 |
| 1050 | 1,95 | 727 | 1326 | 45,5 | 6,3 |
| 1050 | 1,7 | 767 | 1476 | 45,5 | 6,7 |
| 1050 | 4,0 | 930 | 800 | 52 | 4,7 |
| 1050 | 3,0 | 920 | 967 | 52 | 6,0 |

Tableau 4   (suite)

| Alliage | e mm | Effort t/m | 300+2000/e t/m | Arc contact mm | Taux cornes % |
|---------|------|-----------|----------------|----------------|---------------|
| 1050 | 3,1 | 1253 | 945 | 70 | 8,5 |
| 1050 | 3,5 | 720 | 871 | 53 | 4 |
| 8011 | 3,9 | 1019 | 813 | 57 | 9,0 |
| 1200 | 4,15 | 780 | 782 | 58 | 6,5 |
| 1200 | 4,15 | 769 | 782 | 58 | 5,4 |
| 1200 | 3,6 | 1055 | 856 | 62 | 8,8 |
| 8011 | 3,8 | 1440 | 826 | 55 | 7,5 |
| 8011 | 3,7 | 1440 | 841 | 56 | 8,2 |
| 1200 | 3,0 | 1230 | 967 | 55 | 12 |
| 8011 | 3,8 | 1104 | 826 | 57 | 7,6 |
| 8011 | 3,35 | 850 | 901 | 56 | 5,2 |
| 8011 | 3,55 | 979 | 862 | 56 | 9,5 |
| 8011 | 3,65 | 925 | 849 | 57 | 9,6 |

On constate qu'il n'y a pas de corrélation entre l'épaisseur de coulée et le taux de cornes, mais que les taux de cornes élevés (> 7) correspondent à des efforts élevés (> 300 + 2000/e) et/ou à des arcs de contact élevés (> 56 mm).

**Exemple 4: caractéristiques mécaniques après émaillage et revêtement PTFE**

On a mesuré pour différents alliages selon l'invention les caractéristiques mécaniques à l'état brut de coulée, après revêtement anti-adhésif PTFE comportant un recuit de polymérisation de la résine à 420°C et après émaillage comportant un recuit d'émail à 560°C. On a comparé les résultats après traitement thermique à ceux obtenus avec les alliages 4006 et 4007 transformés de manière traditionnelle, qui sont les alliages les plus performants utilisés pour la fabrication d'ustensiles culinaires èmaillés et revêtus de PTFE. Les résultats sont repris au tableau 5:

Tableau 5

| All. | e mm | Brut coulée | | | Après revêt. PTFE | | | Après émail | | |
|------|------|---------------|------------------|-----|---------------|------------------|-----|---------------|------------------|-----|
|      |      | $R_m$ MPa | $R_{0,2}$ MPa | A % | $R_m$ MPa | $R_{0,2}$ MPa | A % | $R_m$ MPa | $R_{0,2}$ MPa | A % |
| 3003 | 3,0 | 158 | 114 | 22 | 154 | 110 | 23 | 148 | 105 | 26 |
| 3003 | 3,5 | 181 | 141 | 17 | 173 | 136 | 20 | 156 | 111 | 25 |
| 8006 | 3,1 | 166 | 118 | 25 | 151 | 108 | 27 | 132 | 85 | 32 |
| 8011 | 3,9 | 156 | 112 | 23 | 139 | 75 | 28 | 125 | 36 | 36 |
| 1200 | 3,0 | 121 | 93 | 32 | 100 | 64 | 34 | 80 | 20 | 50 |
| 4006 |  |  |  |  | 120 | 55 | 48 | 142 | 59 | 42 |
| 4007 |  |  |  |  | 161 | 68 | 30 | 173 | 76 | 26 |

On constate qu'après revêtement PTFE, les alliages peu chargés 1200, 8006 et 8011 coulés en coulée continue selon l'invention présentent encore une limite élastique comparable à celle des alliages 4006 et 4007 spécialement conçus pour leur résistance aux températures élevées. Après émaillage, l'alliage 3003 selon l'invention présente une limite élastique nettement plus élevée que celle des alliages 4006 et 4007 en coulée traditionnelle, alors que ces alliages sont spécialement destinés à l'émaillage.

**Exemple 5: lois d'écrouissage**

On a comparé les courbes d'écrouissage de bandes d'alliages 1200 et 3003 issues respectivement de coulée traditionnelle et de coulée continue selon l'invention à partir d'une épaisseur initiale de 3 mm jusqu'à des épaisseurs finales allant jusqu'à 1,25 mm, c'est-à-dire pour des valeurs de ε comprises entre 0 et 1. les valeurs respectives des coefficients k et n de la courbe $R_{0,2} = k\,\varepsilon^n$ sont données dans le tableau 6:

Tableau 6

| Alliage | coulée | k | n |
|---|---|---|---|
| 1200 | invention | 169 | 0,13 |
| 1200 | traditionnelle | 105 | 0,21 |
| 3003 | invention | 229 | 0,12 |
| 3003 | traditionnelle | 150 | 0,22 |

On constate que, pour les bandes selon l'invention dans le domaine considéré, k est plus élevé et n plus faible, ce qui conduit à un écrouissage plus important puisque ε < 1 et n < 1.

**Revendications**

1. Procédé de fabrication de bandes en alliage d'aluminium contenant l'un au moins des éléments Fe ou Mn, avec, en poids, Fe entre 0,15 et 1,5%, Mn entre 0,35 et 1,9%, Fe + Mn < 2,5%, et contenant éventuellement Si < 0,8%, Mg < 0,2%, Cu < 0,2%, Cr < 0,2%, Zn < 0,2%, autres éléments < 0,1% chacun et 0,3% au total, par coulée continue entre deux cylindres refroidis et frettés à une épaisseur comprise entre 1 et 5 mm, suivie éventuellement d'un laminage à froid, l'effort appliqué aux cylindres pendant la coulée, exprimé en t par mètre de largeur de bande, étant inférieur à 300 + 2000/e, e étant l'épaisseur de la bande coulée exprimée en mm.

2. Procédé de fabrication de bandes selon la revendication 1, **caractérisé en ce que** l'échange thermique entre le métal et les frettes des cylindres au cours de la coulée est ralenti de telle sorte que la température des frettes est supérieure à 80°C, et de préférence à 130°C.

3. Procédé selon la revendication 2, **caractérisé en ce que** le matériau des frettes est mauvais conducteur thermique.

4. Procédé selon l'une des revendications 1 à 3, **caractérisé en ce que** l'arc de contact entre le métal et les cylindres de coulée est inférieur à 60 mm, et de préférence à 56 mm.

5. Bande en alliage d'aluminium contenant l'un au moins des éléments Fe ou Mn, avec, en poids, Fe entre 0,15 à 1,5%, Mn entre 0,35 et 1,9%, Fe + Mn < 2,5%, et contenant éventuellement Si < 0,8%, Mg < 0,2%, Cu < 0,2%, Cr < 0,2%, Zn < 0,2%, autres éléments < 0,1% chacun et 0,3% au total, coulée en continu à une épaisseur comprise entre 1 et 5 mm, présentant à l'état brut de coulée un produit $R_{0,2}$ (en MPa) x A (en %) supérieur à 2500.

6. Bande selon la revendication 5 présentant un produit $R_{0,2}$ x A supérieur à 3000.

7. Bande selon l'une des revendications 5 ou 6 présentant une limite élastique $R_{0,2}$ supérieure à 80 MPa.

8. Bande selon la revendication 7 présentant une limite élastique $R_{0,2}$ > 100 MPa.

9. Bande selon l'une des revendications 5 à 8 présentant un allongement à la rupture A > 20%.

10. Bande en alliage sans Mn selon la revendication 9 présentant un allongement à la rupture A > 30%.

11. Bande selon l'une des revendications 5 à 10, présentant un taux de cornes inférieur à 7.

12. Bande selon la revendication 11, présentant un taux de cornes inférieur à 5.

13. Bande selon l'une des revendications 5 à 12, **caractérisée en ce que** la taille moyenne des particules intermétalliques contenant Fe, Mn et/ou Si est inférieure ou égale à 0,4 $\mu$m.

**14.** Bande selon l'une des revendications 5 à 13, **caractérisée en ce que** 90% au moins des particules intermétalliques contenant Fe, Mn et/ou Si ont une taille inférieure à 1 μm.

**15.** Bande en alliage Al-Mn selon l'une des revendications 5 à 14 avec Fe + Mn > 1,4% présentant, après traitement d'émaillage et/ou de revêtement antiadhésif PTFE, une limite élastique $R_{0,2}$ supérieure à 80 MPa et de préférence à 100 MPa.

**16.** Bande laminée à froid à partir d'une bande selon l'une quelconque des revendications 5 à 15, **caractérisée en ce que** les coefficients k et n de la courbe d'écrouissage $R_{0,2} = k\, \varepsilon^n$, où $\varepsilon = (2/\sqrt{3})\, l_n$(épaisseur initiale/épaisseur finale), sont tels que k > 150 et n < 0,20.

**17.** Bande selon la revendication 16, **caractérisée en ce que** n < 0,15.

**18.** Ustensile culinaire émaillé et/ou revêtu d'un antiadhésif PTFE fabriqué à partir de bandes selon l'une des revendications 5 à 17.

**19.** Bande laquée ou vernie selon l'une des revendications 5 à 17.

## Patentansprüche

**1.** Verfahren zur Herstellung von Bändern aus Aluminiumlegierung mit mindestens einem der Elemente Fe oder Mn, mit - in Masse - Fe zwischen 0,15 und 1,5 %, Mn zwischen 0,35 und 1,9 %, Fe + Mn < 2,5 %, und eventuell mit Si < 0,8 %, Mg < 0,2 %, Cu < 0,2 %, Cr < 0,2 %, Zn < 0,2 %, weitere Elemente jeweils < 0,1 % und insgesamt 0,3 %, durch kontinuierliches Gießen zwischen zwei gekühlte und beringte Walzen auf eine Dicke von 1 bis 5 mm, eventuell mit nachfolgendem Kaltwalzen, wobei die während des Gießens auf die Walzen ausgeübte Kraft, ausgedrückt in t je Meter Bandbreite, kleiner 300 + 2000/e ist, wobei e die in mm ausgedrückte Dicke des gegossenen Bandes ist.

**2.** Verfahren zur Herstellung von Bändern nach Anspruch 1, **dadurch gekennzeichnet, dass** der Wärmeaustausch zwischen dem Metall und den Ringen der Walzen während des Gießens gedrosselt wird, so dass die Temperatur der Ringe höher als 80°C und vorzugsweise höher als 130° C ist.

**3.** Verfahren nach Anspruch 2, **dadurch gekennzeichnet, dass** der Werkstoff der Ringe ein schlechter Wärmeleiter ist.

**4.** Verfahren nach einem der Ansprüche 1 bis 3, **dadurch gekennzeichnet, dass** der Kontaktbogen zwischen dem Metall und den Gießwalzen kleiner als 60 mm und vorzugsweise kleiner als 56 mm ist.

**5.** Band aus Aluminiumlegierung mit mindestens einem der Elemente Fe oder Mn, mit - in Masse - Fe zwischen 0,15 und 1,5 %, Mn zwischen 0,35 und 1,9 %, Fe + Mn < 2,5 %, und eventuell mit Si < 0,8 %, Mg < 0,2 %, Cu < 0,2 %, Cr < 0,2 %, Zn < 0,2 %, weitere Elemente jeweils < 0,1 % und insgesamt 0,3 %, das kontinuierlich auf eine Dicke von 1 bis 5 mm gegossen wird und im Walzzustand ein Produkt $R_{0,2}$ (in MPa) x A (in %) größer 2500 aufweist.

**6.** Band nach Anspruch 5, das ein Produkt $R_{0,2}$ x A größer 3000 aufweist.

**7.** Band nach einem der Ansprüche 5 oder 6, das eine Dehngrenze $R_{0,2}$ größer 80 MPa aufweist.

**8.** Band nach Anspruch 7, das eine Dehngrenze $R_{0,2}$ > 100 MPa aufweist.

**9.** Band nach einem der Ansprüche 5 bis 8, das eine Bruchdehnung A > 20 % aufweist.

**10.** Band aus Aluminiumlegierung ohne Mn nach Anspruch 9, das eine Bruchdehnung A > 30 % aufweist.

**11.** Band nach einem der Ansprüche 5 bis 10, das einen Zipfelanteil kleiner 7 aufweist.

**12.** Band nach Anspruch 11, das einen Zipfelanteil kleiner 5 aufweist.

13. Band nach einem der Ansprüche 5 bis 12, **dadurch gekennzeichnet, dass** die durchschnittliche Größe der Fe, Mn und/oder Si enthaltenden intermetallischen Teilchen kleiner oder gleich 0,4 um ist.

14. Band nach einem der Ansprüche 5 bis 13, **dadurch gekennzeichnet, dass** mindestens 90 % der Fe, Mn und/ oder Si enthaltenden intermetallischen Teilchen eine Größe kleiner 1 $\mu$m haben.

15. Band aus Al-Mn-Legierung nach einem der Ansprüche 5 bis 14 mit Fe + Mn > 1,4 %, das nach Emaillierung und/ oder antiadhäsiver PTFE-Beschichtung eine Dehngrenze $R_{0,2}$ größer 80 MPa und vorzugsweise größer 100 MPa aufweist.

16. Kaltgewalztes Band hergestellt aus einem Band nach einem der Ansprüche 5 bis 15, **dadurch gekennzeichnet, dass** die Koeffizienten k und n der Kaltverfestigungskurve $R_{0,2} = k \varepsilon^n$, wobei $\varepsilon = (2/\sqrt{3}) l_n$(Ausgangsdicke/Enddicke), so gewählt sind, dass k > 150 und n < 0,20.

17. Band nach Anspruch 16, **dadurch gekennzeichnet, dass** n < 0,15.

18. Emailliertes und/oder mit einem antiadhäsiven PTFE-Überzug versehenes Küchengerät, hergestellt aus Bändern nach einem der Ansprüche 5 bis 17.

19. Lackiertes oder mit einem Anstrich versehenes Band nach einem der Ansprüche 5 bis 17.


**Claims**

1. Method for producing aluminium alloy strips containing (by weight) at least one of elements Fe (from 0.15 to 1.5%) or Mn (from 0.35 to 1.9%) with Fe + Mn < 2.5%, and optionally containing Si(< 0.8%), Mg (< 0.2%), Cu (< 0.2%), Cr (< 0.2%), Zn(< 0.2%), other elements < 0.1% each and 0.3% in total, by continuous twin-roll casting between cooled shrinked rolls to a thickness of between 1 and 5 mm, optionally followed by cold rolling, the force applied to the rolls during casting expressed in t per meter of strip width being less than 300 + 2000/e, where e is the thickness of the cast strip expressed in mm.

2. Method for producing strips according to claim 1, **characterized in that** the heat exchange between the metal and the cylinder shells during casting is decelerated such that the temperature of the shells is more than 80°C and preferably more than 130°C.

3. Process according to claim 2, **characterized in that** the material used for the shells is a poor heat conductor.

4. Process according to any one of claims 1 to 3, **characterized in that** the contact arc between the metal and the casting rolls is less than 60 mm and preferably less than 56 mm.

5. Aluminium alloy strip containing (by weight) at least one of elements Fe (from 0.15 to 1.5%) or Mn (from 0.35 to 1.9%) with Fe + Mn < 2.5%, and optionally containing Si(< 0.8%), Mg (< 0.2%), Cu (< 0.2%), Cr (< 0.2%), Zn(< 0.2%), other elements < 0.1% each and 0.3% in total, by continuous casting to a thickness of between 1 and 5 mm, in which the product $R_{0,2}$ (in MPa) x A (in %) is more than 2500 in the as cast state.

6. Strip according to claim 5, in which the product $R_{0,2}$ x A is more than 3000.

7. Strip according to either of claims 5 or 6, with a yield stress $R_{0,2}$ more than 80 MPa.

8. Strip according to claim 7, with a yield stress $R_{0,2}$ more than 100 MPa.

9. Strip according to any one of claims 5 to 8, with an elongation at failure A > 20%.

10. Strip made of alloy without Mn according to claim 9, with an elongation at failure A > 30%.

11. Strip according to any one of claims 5 to 10, with an earing ratio of less than 7.

12. Strip according to claims 11, with an earing ratio of less than 5.

**13.** Strip according to any one of claims 5 to 12, **characterized in that** the average size of the intermetallic particles containing Fe, Mn and/or Si is not more than 0.4 μm.

**14.** Strip according to any one of claims 5 to 13, **characterized in that** at least 90% of the intermetallic particles containing Fe, Mn and/or Si are smaller than 1 μm.

**15.** Strip made of Al-Mn alloy according to any one of claims 5 to 14, with Fe + Mn > 1.4% having a yield strength $R_{0.2}$ after enamelling and/or PTFE anti-adhesive coating treatment of more than 80 MPa, and preferably more than 100 MPa.

**16.** Cold rolled strip from a strip according to any one of claims 5 to 15, **characterized in that** the coefficients k and n of the work hardening curve $R_{0.2} = k \, \varepsilon^n$, in which $\varepsilon = (2/\sqrt{3}) \, l_n$ (initial thickness/final thickness) are such that k > 150 and n < 0.20.

**17.** Strip according to claim 16, **characterized in that** n < 0.15.

**18.** Enamelled and/or PTFE anti-adhesive coated cooking utensil produced from strips according to one of claims 5 to 17.

**19.** Lacquered or varnished strip according to one of claims 5 to 17.